# EUROPÄISCHE PATENTSCHRIFT

(11) **EP 1 168 119 B1**
(45) Veröffentlichungstag und Bekanntmachung des Hinweises auf die Patenterteilung: **20.08.2008**
(21) Anmeldenummer: 01113478.0
(22) Anmeldetag: 02.06.2001
(51) Int. Cl.: G05B 19/042

(54) **Steuergerät mit einem Hauptmikroprozessor und mit einer Prozessorschnittstelle zu einer Bus-Sende-Empfangseinheit**
Control device with a main processor and with a processor interface to a bus-receive-send unit
Appareil de commande comportant un microprocesseur principal et une interface processeur avec une unité d'expédition-réception sur le bus

(30) Priorität: 20.06.2000 DE 10030158
(43) Veröffentlichungstag der Anmeldung: 02.01.2002
(73) Patentinhaber: Bayerische Motoren Werke Aktiengesellschaft, 80809 München (DE)
(72) Erfinder: Fröschl, Joachim, 82229 Seefeld (DE); Krammer, Josef, Dr., 83607 Holzkirchen (DE); Schedl, Anton, Dr., 80798 München (DE)

(56) Entgegenhaltungen:
- DE-A1- 3 506 118
- DE-A1- 19 616 753
- US-A- 4 571 672
- US-A- 5 617 433
- PATENT ABSTRACTS OF JAPAN Bd. 012, Nr. 377 (P-768), 7. Oktober 1988 (1988-10-07) & JP 63 124161 A (FUJITSU LTD), 27. Mai 1988 (1988-05-27)

## Beschreibung

Die Erfindung bezieht sich auf ein Steuergerät mit einem Hauptmikroprozessor und mit einer Prozessorschnittstelle zu einer Bus-Sende-Empfangseinheit nach dem Oberbegriff des Patentanspruchs 1.

Ein derartiges Steuergerät wird insbesondere in Kraftfahrzeugen im Zusammenhang mit der Übertragung von kraftfahrzeugtechnischen Daten über einen Daten-Bus (z. B. CAN-Bus, DE 35 06 118 A) verwendet.

Beispielsweise gibt bei derartigen bekannten Bus-Systemen der Hauptmikroprozessor eines Steuergeräts in Form eines Busteilnehmers einen Sendeauftrag an den Buscontroller zum Ausgeben der im Sendespeicher abgelegten Daten aus, nachdem er zuvor einen Befehl zum Übertragen von definierten Daten in den Sendespeicher erteilt hatte. Eine Kontrolle des im Sendespeicher momentan abgelegten Dateninhalts, z. B. im Hinblick auf die Gültigkeit und Aktualität der Daten, erfolgt dabei bislang nicht. Zwar sind Bussysteme bekannt, die zusammen mit Nutzdaten zusätzlich einen Zählerstand oder sog. "Toggle-bits" versenden, um die Aktualität der Daten zu erkennen, hierbei wird jedoch zusätzlicher Speicherplatz benötigt. Eine vergleichbare Problematik ergibt sich im Hinblick auf den Dateninhalt der Empfangsspeicher.

Aus der US-A-4 571 672 ist ein Multiprozessor-System mit einer Mehrzahl von Prozessoren und einem gemeinsamen Speicher bekannt, die mit einem gemeinsamen Bus verbunden sind, wobei das Verfahren der Zugangskontrolle einen Datenzugang aufweist, in den Daten nur dann eingeschrieben werden können, wenn der Datenzugang nicht besetzt ist. Vom Datenzugang können Daten nur dann ausgelesen werden, wenn der Datenzugang den gemeinsamen Speicher bildet. Die auf den Datenzugang zugreifenden Prozessoren schreiben die Daten doppelt und ein zweifaches Lesen der gleichen Daten wird verhindert. Eine Ausschlusskontrolle wird durch den Datenzugang herbeigeführt.

Es ist Aufgabe der Erfindung, auf einfache und kostengünstige Weise die Übertragung und den Empfang von scheinbar gültigen Daten über einen Bus zu verhindern.

Die Aufgabe wird durch die Merkmale des Patentanspruchs 1 gelöst. Vorteilhafte Ausgestaltungen der Erfindung sind die Gegenstände der abhängigen Patentansprüche.

Erfindungsgemäß wird im Wesentlichen der Dateninhalt des Sendespeichers und/oder des Empfangsspeichers nach jedem Ausgeben und/oder Einlesen der darin gespeicherten Daten in einen definierten Zustand in Form eines "Resets" zurückgesetzt, bevor der Hauptmikroprozessor neue Daten ausgibt und/oder einliest. Dieser "Reset" wird beispielsweise durch Belegen des Speicherinhalts mit einer definierten "Ungültigkeitskennzeichnung" vorgenommen. Das Zurücksetzen des Dateninhalts erfolgt entweder durch den Hauptmikroprozessor, vorzugsweise per Software, oder durch den meist einfacheren Buscontroller, vorzugsweise per Hardware. Insbesondere muss der "Reset" durchgeführt werden, bevor ein neuer Sende- oder Empfangsauftrag vom Hauptmikroprozessor ausgegeben wird.

Sollten die Daten, beispielsweise aufgrund eines defekten Pfades oder eines defekten Speichers, nicht aktualisiert worden sein, wird beim nächsten Sende- bzw. Empfangsauftrag entweder automatisch der Dateninhalt entsprechend dem definierten Zustand des Sende- bzw. Empfangsspeichers übertragen, so dass die Empfänger der Daten erkennen, dass keine gültigen Daten vorliegen, oder das Ausgeben bzw. Einlesen der Daten wird ganz verhindert.

Vorzugsweise wird z. B. vom Hauptmikroprozessor der Dateninhalt nach dem Zurücksetzen überprüft, ob der Dateninhalt auch tatsächlich dem definierten Zustand entspricht. Voraussetzung hierfür ist ein grundsätzlich vorhandener Rücklesepfad. Wenn der definierte Zustand nicht vorliegt, wird ein Fehler erkannt und vorzugsweise abgespeichert. Auch kann bei Vorliegen dieses Fehlers ein zukünftiger Sende- bzw. Empfangsauftrag unterbunden werden.

Vor dem nächsten Ausgeben von Daten aus dem Sendespeicher auf den Bus und/oder vor dem nächsten Einlesen von Daten vom Empfangsspeicher kann überprüft werden, ob der definierte Zustand ("Ungültigkeitskennzeichnung") vorliegt. Ist dies der Fall, wird vorzugsweise das Ausgeben und/oder Einlesen von Daten verhindert.

Durch diese Erfindung wird für die Absicherung der Daten kein zusätzlicher Speicherplatz im Bereich der Nutzdaten benötigt. Der Reset der Daten erfolgt automatisch unabhängig von der Applikation der Daten.

In der Zeichnung ist ein Ausführungsbeispiel der Erfindung dargestellt. Es zeigt
- Fig. 1: einen Blockschaltplan über die für die Erfindung wesentlichen schaltungstechnischen Merkmale und
- Fig. 2: einen Logikschaltplan über die für die Erfindung wesentlichen programmtechnischen Merkmale

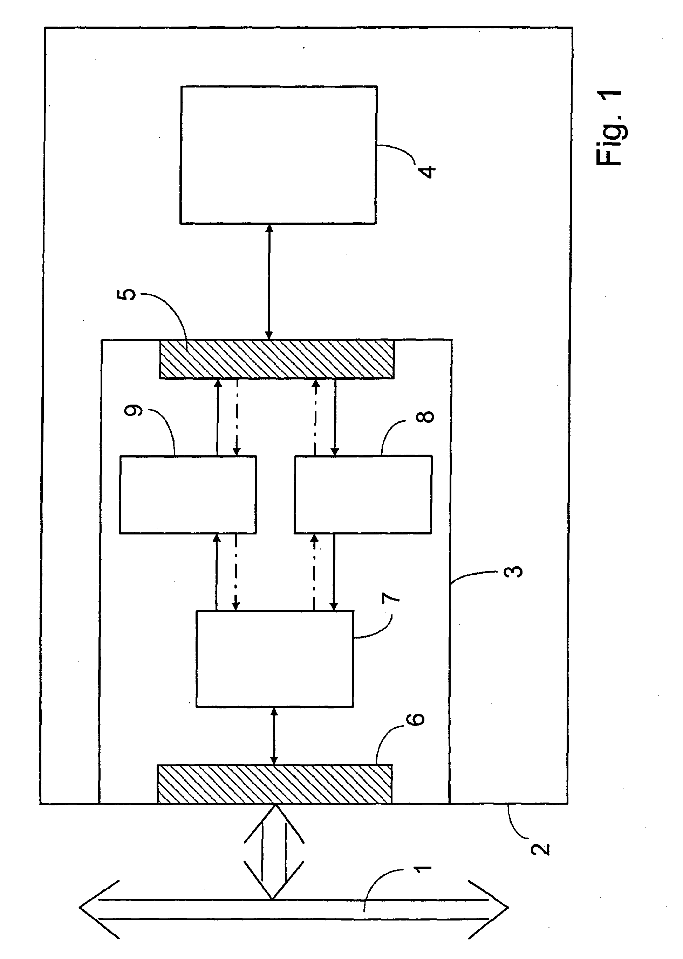

In Fig. 1 ist ein Steuergerät 2 über eine Busschnittstelle 6 als Busteilnehmer an einen Bus 1 angeschlossen. Das Steuergerät 2 weist einen Hauptmikroprozessor 4 und eine Prozessorschnittstelle 5 zu einer Bus-Sende-Empfangseinheit 3 auf. Die Bus-Sende-Empfangseinheit 3 umfaßt zumindest einen Sendespeicher 8, einen Empfangsspeicher 9 und einen Buscontroller 7. Die Daten-Pfade zwischen dem Buscontroller 7 einerseits und dem Hauptmikroprozessor andererseits jeweils zum Sendespeicher 8 und zum Empfangsspeicher 9 können entweder unidirektional (durchgehende Pfeile) oder bidirektional (zusätzliche gestrichelte Pfeile) sein. Bei bidirektionalen Daten-Pfaden liegen Rücklesepfade vor.

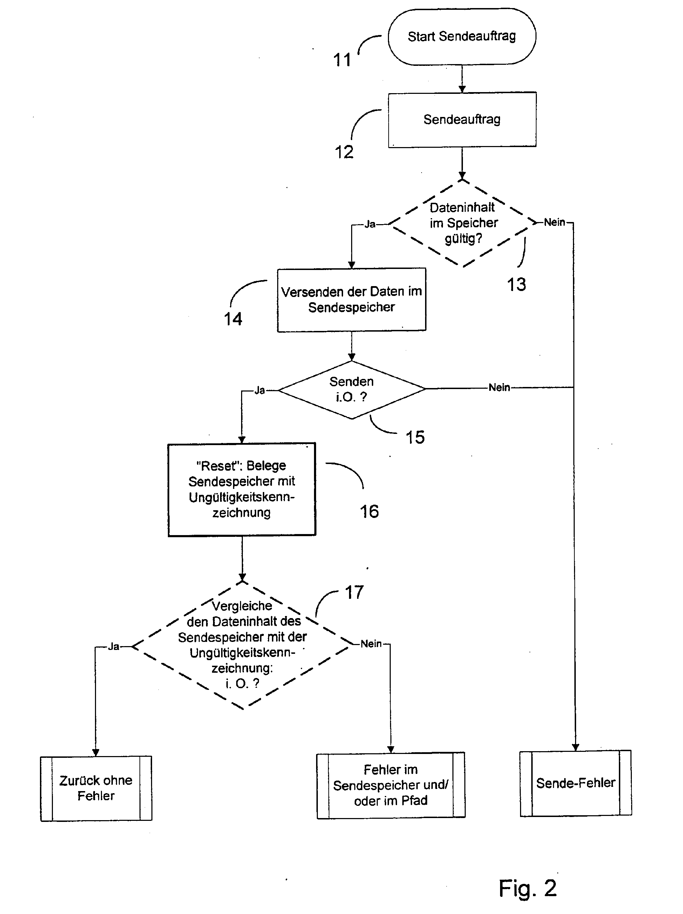

In Fig. 2 werden am Beispiel einer Datenausgabe über den Sendespeicher 8 die funktionstechnischen Merkmale der Erfindung erläutert. Im Block 11 des Logikschaltplanes beginnt ein Sendeauftrag vom Hauptmikroprozessor 4, nachdem er zuvor einen Befehl zum Übertragen von definierten Daten in den Sendespeicher 8 erteilt hatte. Der Sendeauftrag wird gemäß Block 12 entweder ereignisgesteuert oder zyklisch ausgegeben.

Durch Block 13, der lediglich optional vorgesehen ist, wenn ein Rücklesepfad vom Sendespeicher 8 zum Hauptmikroprozessor 4 vorgesehen ist, wird der Dateninhalt vor dem Ausgeben aus dem Sendespeicher 8 auf den Bus 1 dahingehend überprüft, ob er entsprechend dem definierten Zustand mit einer "Ungültigkeitskennzeichnung" versehen ist. Wenn dies der Fall ist, wird das Ausgeben der Daten verhindert und ein Sende-Fehler generiert. Wenn keine "Ungültigkeitskennzeichnung" vorliegt, werden im Block 14 die Daten versendet.

Wenn im Block 15 festgestellt wird, daß das Senden mit Erfolg durchgeführt wurde, wird durch Block 16 der Dateninhalt des Sendespeichers 8 in einen definierten Zustand zurückgesetzt, indem der Dateninhalt eine "Ungültigkeitskennzeichnung" erhält, z. B. FF hex in jedem Byte des Sendespeichers 8. Die "Ungültigkeitskennzeichnung" wird vorzugsweise durch den Hauptmikroprozessor 4 vorgenommen, sie kann aber auch durch den Buscontroller 7 vorgenommen werden.

Im Block 17 wird der Dateninhalt optional, insbesondere nur wenn ein Rücklesepfad vorhanden ist, nach dem Zurücksetzen dahingehend überprüft, ob die "Ungültigkeitskennzeichnung" auch tatsächlich im Sendespeicher 8 vorliegt. Ist dies nicht der Fall, wird ein Fehler erkannt und abgespeichert, durch den auf einen defekten Pfad und/oder auf einen defekten Speicher geschlossen werden kann.

Hierdurch ist eine einfache Vorrichtung und ein wirksames Verfahren zur Verhinderung der Übertragung von scheinbar gültigen, beispielsweise veralteten, Daten über einen Bus geschaffen.

## Patentansprüche

1. Steuergerät mit einem Hauptmikroprozessor (4) und mit einer Prozessorschnittstelle (5) zu einer Bus-Sende-Empfangseinheit (3), die zumindest einen Sendespeicher (8), einen Empfangsspeicher (9) und einen Buscontroller (7) aufweist, **dadurch gekennzeichnet, dass** Mittel (16) vorgesehen sind, durch die der Dateninhalt des Sendespeichers (8) und/oder des Empfangsspeichers (9) nach jedem Ausgeben und/oder Einlesen der darin gespeicherten Daten in einen definierten Zustand zurückgesetzt wird in dem der Datenishalt eine Ungultigkeitskennzeichnung erhält, bevor der Hauptmikroprozessor (4) neue Daten ausgibt und/oder einliest, und ein Sendeauftrag vom Hauptmikroprozessor (4) beginnt, nachdem er zuvor einen Befehl zum Übertragen von definierten Daten in den Sendespeicher (8) erteilt hatte.

2. Steuergerät nach Patentanspruch 1, **dadurch gekennzeichnet, dass** der Dateninhalt durch den Hauptmikroprozessor (4) zurückgesetzt wird.

3. Steuergerät nach Patentanspruch 1, **dadurch gekennzeichnet, dass** der Dateninhalt durch den Buscontroller (7) zurückgesetzt wird.

4. Steuergerät nach einem der Patentansprüche 1 bis 3, **dadurch gekennzeichnet, dass** Mittel (17) vorgesehen sind, durch die der Dateninhalt nach dem Zurücksetzen überprüft wird und dass ein Fehler erkannt wird, wenn der definierte Zustand nicht vorliegt.

5. Steuergerät nach einem der Patentansprüche 1 bis 4, **dadurch gekennzeichnet, dass** Mittel (13) vorgesehen sind, durch die der Dateninhalt vor dem nächsten Ausgeben von Daten aus dem Sendespeicher (8) auf den Bus (1) und/oder vor dem nächsten Einlesen von Daten aus dem Empfangsspeicher (9) überprüft wird und dass das Ausgeben und/oder Einlesen von Daten verhindert wird, wenn der definierte Zustand vorliegt.

6. Verfahren zur Verhinderung der Übertragung von scheinbar gültigen Daten über einen Bus mittels eines Steuergeräts nach einem der Patentansprüche 1 bis 5.

## Claims

1. A control device with a main microprocessor (4) and with a processor interface (5) to a bus transceiver unit (3), which has at least one transmission memory (8), a reception memory (9) and a bus controller (7), **characterised in that** means (16) are provided, by means of which the data content of the transmission memory (8) and/or of the reception memory (9) is reset to a defined state after each output and/or read-in operation of the data stored therein, **in that** the data content receives an invalidity identification before the main microprocessor (4) outputs and/or reads in new data, and a transmission instruction from the main microprocessor (4) begins once it has given a command beforehand to transmit defined data to the transmission memory (8).

2. A control device according to claim 1, **characterised in that** the data content is reset by the main microprocessor (4).

3. A control device according to claim 1, **characterised in that** the data content is reset by the bus controller (7).

4. A control device according to any one of claims 1 to 3, **characterised in that** means (17) are provided by means of which the data content is checked after the resetting operation and **in that** a defect is recognised if the defined state is not present.

5. A control device according to any one of claims 1 to 4, **characterised in that** means (13) are provided, by means of which the data content is checked before the next outputting operation of data from the transmission memory (8) to the bus (1) and/or before the next reading in operation of data from the reception memory (9) and **in that** the outputting and/or reading in operation of data is prevented if the defined state is present.

6. A method for preventing the transmission of apparently valid data via a bus by means of a control device according to any one of claims 1 to 5.

## Revendications

1. Appareil de commande comportant un microprocesseur principal (4) et une interface de processeur (5) vers une unité émission/réception (3) de bus, ayant au moins une mémoire d'émission (8), une mémoire de réception (9) et un contrôleur de bus (7),
**caractérisé par**
des moyens (16) qui remettent dans un état défini, le contenu des données de la mémoire d'émission (8) et/ou de la mémoire de réception (9) après chaque émission et/ou enregistrement des données mémorisées, en ce qu'on attribue au contenu des données, une caractéristique de non validité, avant que le microprocesseur principal (4) émette et/ou enregistre de nouvelles données et commence une tâche d'émission par le microprocesseur principal (4) après avoir attribué préalablement un ordre pour transmettre des données définies dans la mémoire d'émission (8).

2. Appareil de commande selon la revendication 1,
**caractérisé en ce que**
le contenu des données est remis à l'état initial par le microprocesseur principal (4).

3. Appareil de commande selon la revendication 1,
**caractérisé en ce que**
le contenu des données est remis à l'état initial par le contrôleur de bus (7).

4. Appareil de commande selon l'une des revendications 1 à 3,
**caractérisé par**
des moyens (17) qui vérifient le contenu des données après la remise à l'état initial et en ce qu'un défaut est constaté en l'absence d'état défini.

5. Appareil de commande selon l'une des revendications 1 à 4,
**caractérisé par**
des moyens (13) qui vérifient le contenu des données avant l'émission suivante des données à partir de la mémoire d'émission (8) sur le bus (1) et/ou avant l'enregistrement suivant des données à partir de la mémoire de réception (9) et
l'émission et/ou l'enregistrement des données est interdit si on est en présence de l'état défini.

6. Procédé pour éviter la transmission de données apparemment valides par un bus à l'aide d'un appareil de commande selon l'une des revendications 1 à 5.
